# FASCICULE DE BREVET EUROPEEN

(11) **EP 3 195 581 B1**
(45) Date de publication et mention de la délivrance du brevet: **10.06.2020**
(21) Numéro de dépôt: 15759863.2
(22) Date de dépôt: 27.07.2015
(51) Int. Cl.: H04M 15/00, H04L 12/14

(54) **PROCÉDÉ ET DISPOSITIF D'OPTIMISATION DU COMPTAGE ET DE L'USAGE DE DONNÉES PAR UN TERMINAL MOBILE**
VERFAHREN UND VORRICHTUNG ZUR OPTIMIERUNG DER DOSIERUNG UND VERWENDUNG VON DATEN DURCH EIN MOBILES ENDGERÄT
METHOD AND DEVICE FOR OPTIMISING THE METERING AND USE OF DATA BY A MOBILE TERMINAL

(30) Priorité: 29.07.2014 FR 1457351
(43) Date de publication de la demande: 26.07.2017
(73) Titulaire: Orange, 75015 Paris (FR)
(72) Inventeur: BARAULT, Eric, F-35235 Thorigne Fouillard (FR); BERTRAND, Simon, F-75017 Paris (FR)
(86) Numéro de dépôt international: PCT/FR2015/052076
(87) Numéro de publication internationale: WO 2016/016568

(56) Documents cités:
- WO-A1-2011/020498
- US-A1- 2009 094 142
- US-A1- 2014 105 018
- "3rd Generation Partnership Project; Technical Specification Group Services and System Aspects; Telecommunication management; Charging management; Diameter charging applications (Release 12)", 3GPP STANDARD; 3GPP TS 32.299, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V12.5.0, 27 juin 2014 (2014-06-27), pages 1-165, XP050774449,

## Description

### 1. Domaine de l'invention

La demande d'invention se situe dans le domaine de l'architecture, dite EPC (Evolved Packet Core, ou cœur évolué à paquets), de réseau cœur mobile définie par le 3GPP à partir de la Release 8, et plus particulièrement dans le domaine du comptage de l'usage de données en émission ou en réception fait par un terminal mobile.

### 2. Etat de la technique antérieure

Durant la consommation de données en émission et/ou en réception qui est faite par un terminal mobile, des compteurs d'usage sont mis à jour périodiquement par des mécanismes d'échanges de quotas entre une entité de contrôle située dans un équipement de gestion, et une entité de comptage située dans un équipement de transport.

Par la suite, le terme "entité de contrôle" désigne indifféremment un équipement dit PCRF (Policy & Charging Rules Function) et/ou un équipement dit OCS (Online Charging System). Le terme "entité de comptage" désigne la fonction dite PCEF (Policy & Charging Enforcement Function) d'une passerelle de type PDN-GW (Packet Data Network Gateway, aussi connue sous l'appellation passerelle P-GW).

La taille des quotas alloués par l'entité de contrôle, c'est-à-dire la fraction d'usage de données autorisée en émission et/ou en réception pour un client, sans qu'il y ait de nouvel échange entre les entités de contrôle et de comptage, définit donc la périodicité avec laquelle les compteurs d'usages sont mis à jour, ainsi que la précision de ces compteurs.

Pour augmenter la précision des compteurs, une solution serait de diminuer la taille des quotas, mais cela augmenterait de façon excessive la fréquence et le nombre des échanges entre les entités de contrôle et de comptage, et nuirait au bon fonctionnement de ces entités.

Un des buts de l'invention est de remédier à ces inconvénients de l'état de la technique.

Lorsqu'un client épuise le dernier quota alloué par l'entité de contrôle, il est mis fin à la session de consommation du service en cours. Si ce client est associé à un autre client, par exemple par un contrat commun avec le fournisseur de service, et qu'il reste du crédit non alloué à cet autre client, il est envisageable que l'entité de contrôle en transfère une partie au client, sauf si l'autre client est en train de consommer son crédit, car dans ce cas l'entité de contrôle ne peut pas déterminer avec précision l'état des compteurs d'usage de l'autre client associé.

Il n'est donc pas possible d'établir un suivi précis des compteurs d'usage d'un groupe de clients liés par un contrat commun, tels que les membres d'un même foyer ou les employés d'une même société, afin de modifier dynamiquement le partage d'un crédit de consommation global restant au groupe.

La publication WO 2011/020498 A1 et la publication US 2009/094142 A1 présentent des solutions de partage de crédit entre des terminaux associés entre eux, mais ces solutions manquent de flexibilité et d'efficacité.

Un des buts de l'invention est de remédier à ces inconvénients de l'état de la technique.

### 3. Exposé de l'invention

L'invention vient améliorer la situation à l'aide d'un procédé de partage de la consommation d'un service de communication électronique par un terminal mobile attaché à un réseau mobile, conforme à la revendication 1.

Périodiquement, la passerelle obtient pour le terminal un quota de crédit pour consommer le service, grâce à une requête de crédit qu'elle émet vers une entité contrôlant le crédit. Selon la technique antérieure, le seul moment où un suivi exact de la consommation effectuée par le terminal est possible est l'instant précis de la réception de cette requête de crédit, avant que la consommation d'un nouveau quota commence. En effet, le message de requête est porteur d'une information relative à la portion consommée du dernier quota de crédit accordé au terminal. Grâce à l'invention, quel que soit l'instant où une requête de suivi du crédit du terminal est faite, une nouvelle requête de crédit est déclenchée. Cette requête de crédit indique quelle portion de ce quota a déjà été consommée par le terminal depuis la dernière autorisation de consommer le quota. On comprend que selon l'invention il suffit d'un seul échange de messages avec la passerelle pour obtenir, au moment souhaité, un suivi de la consommation du terminal qui est exact, quelle que soit la taille du quota de crédit attribué périodiquement au terminal.

Selon la technique antérieure une telle requête de crédit ne peut être déclenchée que par la passerelle, uniquement lorsque le terminal a besoin de crédit. Le déclenchement de cette requête de crédit, par un équipement autre que la passerelle, et à un moment où le terminal n'a pas forcément besoin de crédit, va à l'encontre des préjugés de l'homme de métier.

Dans le cas d'une offre de service sous un seul contrat pour un groupe de plusieurs membres d'un même foyer, ou de plusieurs employés d'une même société, il peut arriver qu'un utilisateur épuise pendant une session son crédit restant avant les autres utilisateurs du groupe. Si aucun quota ne peut lui être attribué, la session est terminée faute de crédit, et le service est coupé.

Selon l'invention, lorsque le crédit restant est épuisé, le procédé obtient un suivi de consommation exacte concernant les autres sessions du groupe, et détermine s'il reste ailleurs du crédit à redistribuer pour permettre à la session de continuer, alloue le cas échéant un nouveau quota de crédit à la session, et évite ainsi une coupure de service.

Selon un aspect de l'invention, le message à destination de la passerelle, destiné à déclencher une requête de crédit pour le terminal, est un message RAR de type Diameter.

Selon un aspect de l'invention, le message de requête de crédit pour le terminal, en provenance de la passerelle, est un message CCR de type Diameter.

Selon un aspect de l'invention, le message de réponse de crédit pour le terminal, à destination de la passerelle, est un message CCA de type Diameter.

Selon un aspect de l'invention, l'émission d'un message CCA en réponse à la réception d'un message CCR correspondant est différée au moins jusqu'à la réception d'un autre message CCR.

Grâce à cet aspect, lorsqu'une entité de contrôle reçoit une requête de crédit pour une session en cours et que le crédit est épuisé, une réponse négative ne sera pas émise dans la foulée. Elle sera émise après la réception d'une autre requête pouvant indiquer qu'il reste du crédit partageable ailleurs. Ainsi, une coupure de service inutile est évitée.

L'invention concerne aussi un dispositif de partage de la consommation d'un service de communication électronique par un terminal mobile attaché à un réseau mobile, conforme à la revendication 6.

Ce dispositif, apte à mettre en œuvre dans tous ses modes de réalisation le procédé de partage de la consommation d'un service de communication électronique par un terminal mobile attaché à un réseau mobile, qui vient d'être décrit, est destiné à être mis en œuvre dans une entité de contrôle, spécialisée dans l'établissement de règles de contrôle PCC (caractéristiques de QoS et de facturation) pour sessions de connectivité IP (sessions utilisateur), par exemple dans un équipement de type "Policy Control and Charging Rules Function" (PCRF, fonction des règles de politique et de comptage, en anglais), ou dans un équipement de type "Online Charging System" (OCS, système de comptage en ligne).

L'invention concerne également une entité de contrôle de réseau mobile, comprenant un dispositif de partage de la consommation d'un service de communication électronique par un terminal mobile attaché à un réseau mobile.

L'invention concerne aussi un programme d'ordinateur comprenant des instructions pour la mise en œuvre des étapes du procédé de partage de la consommation d'un service de communication électronique par un terminal mobile attaché à un réseau mobile, qui viennent d'être décrit, lorsque ce programme est exécuté par un processeur.

L'invention concerne enfin un support d'enregistrement lisible par une entité de contrôle de réseau mobile, sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

### 4. Présentation des figures

D'autre avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente un exemple d'enchainement et de mise en œuvre des étapes d'un procédé de suivi de la consommation d'un service de communication électronique par un terminal mobile attaché à un réseau mobile, selon la technique antérieure,
- la figure 2 présente un exemple d'enchainement et de mise en œuvre des étapes d'un procédé de suivi de la consommation d'un service de communication électronique par un terminal mobile attaché à un réseau mobile, selon un aspect de l'invention,

- la figure 3 présente un exemple d'enchainement et de mise en œuvre des étapes d'un procédé de suivi de la consommation d'un service de communication électronique par un terminal mobile attaché à un réseau mobile, selon un aspect de l'invention, lorsque le terminal est en mesure de partager un crédit d'usage avec d'autres terminaux,
- la figure 4 présente un exemple de structure d'un dispositif de suivi de la consommation d'un service de communication électronique par un terminal mobile attaché à un réseau mobile, selon un aspect de l'invention.

### 5. Description détaillée d'au moins un mode de réalisation de l'invention

Dans la suite de la description, on présente des exemples de plusieurs modes de réalisation de l'invention se basant sur un réseau LTE/EPC (Long Term Evolution / Evolved Packet Core, norme 3GPP aussi connue sous le nom de 4G), mais l'invention s'applique également aux générations antérieures (2G, 3G) et postérieures (5G, etc.) des normes 3GPP.

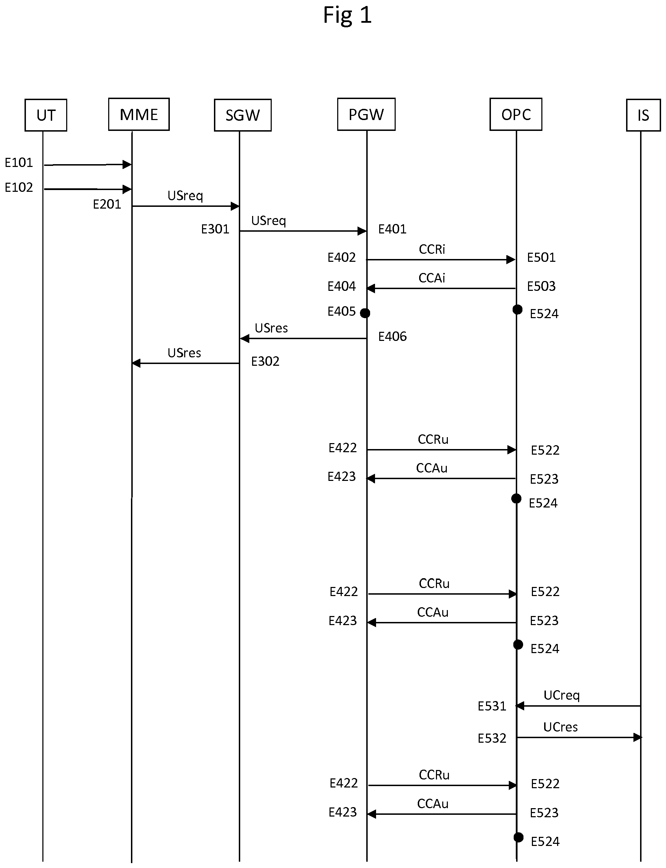

La **figure 1** présente un exemple d'enchainement et de mise en œuvre des étapes d'un procédé de suivi de la consommation d'un service de communication électronique par un terminal mobile attaché à un réseau mobile, selon la technique antérieure.

Dans l'architecture EPC réseau cœur mobile définie par le 3GPP à partir de la Release 8, plusieurs entités du cœur de réseau participent à l'établissement d'une session utilisateur US entre le terminal UT et la passerelle PGW : l'entité de gestion Mobility Management Entity (MME), la passerelle Serving Gateway (SGW) et la passerelle PDN Gateway (PGW).

L'entité de gestion MME est une entité du plan de contrôle (signalisation) EPC dont le but principal est de gérer les procédures de mobilité (signalisation entre les nœuds du réseau cœur pour la mobilité).

La passerelle Serving Gateway (SGW) assure entre autres l'ancrage du média lorsque le mobile change de point d'accès radio en cours de session, des fonctionnalités de comptage et la bufferisation du média à destination de l'utilisateur final lorsque la connectivité radio n'est pas encore établie.

La passerelle PDN Gateway (PGW) fournit entre autres la connectivité IP aux utilisateurs finaux (attribution d'adresse IP) et des fonctionnalités de comptage, d'application de politiques avancées de QoS (Qualité de Service) grâce à sa fonction PCEF.

L'entité de contrôle PCRF (Policy & Charging Rules Function) : il s'agit de l'entité de contrôle du réseau mobile, en fonction des différentes données envoyées par le réseau (type d'accès, adresse SGW, etc.) et de la politique de l'opérateur pour chaque type d'abonnement, la base de donnée utilisateur (type d'offre, etc.) ou les informations sur le service comme codec, type de media. L'entité de contrôle PCRF définit les caractéristiques de QoS et de facturation pour la session utilisateur.

L'entité de consommation du crédit/solde OCS (Online Charging System) contrôle le crédit et le solde disponible pour les utilisateurs. La fonction PCEF de la passerelle PGW ouvre une session de contrôle de crédit avec l'entité OCS afin permettre un contrôle du solde de crédit restant à consommer par l'utilisateur.

Lors de la procédure d'ouverture d'une session utilisateur US (aussi appelée session de connectivité IP, ou "IP CAN session"), la fonction PCEF de la passerelle PGW ouvre une session de contrôle vers l'entité de contrôle OCS et éventuellement vers l'entité de contrôle PCRF.

Des fonctions de contrôle d'usage étant présentes dans le PCRF mais aussi dans l'OCS, dans la suite, le terme "entité de contrôle" désigne indifféremment une entité OCS, une entité PCRF, ou les deux. De même, le terme "passerelle" utilisé seul désigne la passerelle PGW.

Lors d'une étape E101, le terminal UT émet vers l'entité de gestion MME une requête d'attachement au réseau mobile, "Attach request", suivie, lors d'une étape E102, d'une requête de connectivité "PDN connectivity request".

Lors d'une étape E201, l'entité de gestion MME émet vers la passerelle SGW une requête USreq d'ouverture de la session utilisateur US, que la passerelle SGW transmet à la passerelle PGW lors d'une étape E301.

Lors d'une étape E401, la passerelle PGW reçoit la requête d'ouverture de session utilisateur US. Avant de répondre à cette requête, la passerelle PGW doit récupérer les règles de contrôle applicable à cette session. Pour ce faire il doit ouvrir une session de contrôle avec l'entité de contrôle OPC.

Lors d'une étape E402, la passerelle PGW émet ensuite une requête initiale CCRi ("Crédit Control Request"), par exemple de type Diameter, vers l'entité de contrôle OPC. Cette requête CCRi ouvre la session de contrôle et comprend les paramètres suivants:
- identifiant de la session de contrôle ;
- IMSI et/ou MSISDN de l'utilisateur ;
- type d'accès ;
- APN ;
- adresse IP de la passerelle S-GW ;
- MCC et MNC de la passerelle SGW ;
- adresse IP de la passerelle PGW ;
- adresse IP de l'utilisateur ;
- MCC et MNC de l'utilisateur.

Après réception de la requête CCRi lors d'une étape E501, l'entité de contrôle OPC détermine ensuite l'ensemble des règles de contrôle applicables à la session US demandée, en fonction des paramètres reçus, des configurations des entités OPC et des informations de souscription du client dans les bases de données associées aux entités OPC. Par exemple si le paramètre MSISDN ou IMSI correspond à une offre d'utilisateur prépayée, alors un contrôle du crédit de l'utilisateur doit être appliqué.

Lors d'une étape E503, l'entité de contrôle OPC émet une réponse initiale CCAi ("Credit Control Answer"), par exemple de type Diameter.

Cette réponse CCAi comprend les paramètres suivants:
- identifiant de la session de contrôle ;
- qualité de service à appliquer pour chaque service ;
- qualité service à appliquer pour la session utilisateur ;
- services à bloquer ou à autoriser ;
- si le contrôle de crédit de l'utilisateur est applicable, et,
- le cas échéant, un quota d'usage alloué à la session utilisateur.

Après réception de la réponse CCAi lors d'une étape E404, le PWG applique ensuite lors d'une étape E405 l'ensemble des règles de contrôle reçues à la session utilisateur US demandée. La session utilisateur US est ensuite ouverte par la passerelle PGW lors d'une étape E406 où une réponse USres d'ouverture de session utilisateur est émise de la passerelle PGW à la passerelle SGW, que la passerelle SGW transmet à l'entité de gestion MME lors d'une étape E302. A ce stade la session utilisateur US prend naissance.

Lors d'une étape E524, l'entité de contrôle OPC met à jour un compteur associé au crédit total restant pour la session US, par soustraction du quota alloué.

Lorsque la passerelle PGW détecte que le quota d'usage est atteint pour la session US, la passerelle PGW émet alors vers l'entité de contrôle OPC, lors d'une étape E422, une requête de mise à jour CCRu comprenant une information relative au quota consommé.

Lors d'une étape E522, l'entité de contrôle OPC reçoit la requête CCRu, et en déduit qu'un nouveau quota d'usage doit être alloué à la session US.

Lors d'une étape E523, l'entité de contrôle OPC émet vers la passerelle PGW une réponse de mise à jour CCAu comprenant un nouveau quota d'usage alloué à la session utilisateur, après avoir vérifié que le crédit total restant à l'utilisateur pour cette session le permet.

L'entité de contrôle OPC met à jour le compteur associé au crédit total restant, par soustraction du quota alloué, lors d'une nouvelle occurrence de l'étape E524.

Lors d'une étape E423, la passerelle PGW reçoit la réponse de mise à jour CCAu, et applique à la session utilisateur US, sans l'interrompre, les règles de contrôle mises à jour par le message CCAu, en l'occurrence le nouveau quota d'usage que l'utilisateur est autorisé à consommer pour la session US.

Plusieurs itérations des étapes E422, E522, E523, E524 et E423 peuvent avoir lieu, ou aucune, jusqu'à ce que se termine la vie de la session US.

A un moment quelconque dans la vie de la session US, un suivi de la consommation du crédit attribué à l'utilisateur peut être nécessaire, pour des raisons diverses. Par exemple, l'utilisateur lui-même, ou son opérateur de réseau mobile, doit savoir combien de crédit il reste dans le mois, afin d'adapter le rythme de consommation jusqu'à la fin du mois et éviter une surfacturation.

Cette nécessité se traduit par une requête de suivi de consommation UCreq en provenance du système d'information IS de l'opérateur, reçue par l'entité de contrôle OPC lors d'une étape E531.

Lors d'une étape E532, l'entité de contrôle OPC émet une réponse de suivi de consommation UCres comprenant la valeur du compteur associé au crédit total restant pour la session US. On comprend qu'entre le moment où ce compteur a été mis à jour pour la dernière fois lors d'une étape E524, et le moment où la requête de suivi de consommation UCreq est reçue lors de l'étape E531, le quota alloué lors de la dernière étape E523 n'a pas forcément été entièrement consommé. La valeur du compteur n'est donc pas fiable et dépend de la taille du quota qui est utilisé entre les entités OPC et la fonction PCEF de la passerelle PGW.

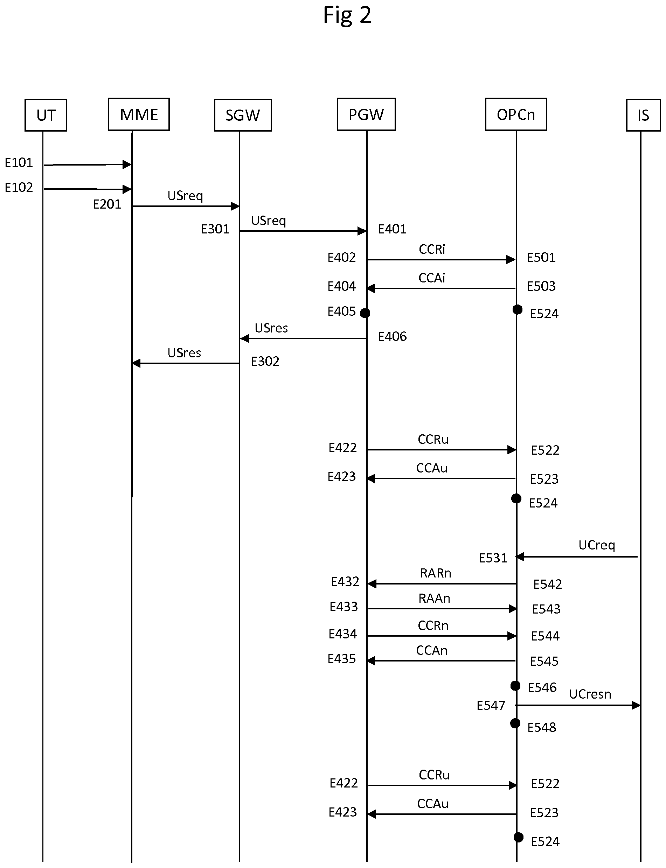

La **figure 2** présente un exemple d'enchainement et de mise en œuvre des étapes d'un procédé de suivi de la consommation d'un service de communication électronique par un terminal mobile attaché à un réseau mobile, selon un aspect de l'invention.

Le procédé de suivi selon l'invention est mis en œuvre par l'entité de contrôle OPCn, et diffère de la technique antérieure en ce que l'étape E532 décrite en relation avec la figure 1 est remplacée par les étapes E542 à E548.

Suite à l'étape E531 où l'entité de contrôle OPCn reçoit une requête de suivi de consommation UCreq en provenance du système d'information IS de l'opérateur, l'entité de contrôle émet vers la passerelle PGW, lors d'une étape E542 une requête de mise à jour RARn ("Re-Auth Request"), par exemple de type Diameter, comprenant les paramètres suivants:
- identifiant de la session de contrôle ;
- IMSI et/ou MSISDN de l'utilisateur ;
- information de demande de remontée de l'état des compteurs, ou tout autre modification de la session utilisateur pouvant engendrer par la suite une commande CCRu/CCAu.

De façon connue, la réception de la requête RARn par la passerelle PGW lors d'une étape E432 déclenche immédiatement les étapes E433 et E434.

Lors de l'étape E433, la passerelle PGW émet vers l'entité de contrôle OPCn une réponse RAAn ("Re-Auth Answer"), par exemple de type Diameter, dont la fonction est d'accuser réception de la requête RARn.

Lors de l'étape E434, la passerelle PGW émet vers l'entité de contrôle OPCn une requête de mise à jour CCRn. A la différence de la requête CCRu émise lors de l'étape E422 décrite en relation avec la figure 1, cette requête CCRn comprend une information relative non pas au quota consommé en totalité, mais relative à la part du quota consommé à un moment précédant immédiatement l'étape E434.

La réponse RAAn et la requête CCRn sont reçues par l'entité de contrôle OPCn respectivement lors des étapes E543 et E544.

Lors d'une étape E545 similaire à l'étape E523 décrite en relation avec la figure 1, et déclenchée par la réception de la requête de crédit CCRn lors de l'étape E544, l'entité de contrôle OPCn émet vers la passerelle PGW une réponse de mise à jour CCAn comprenant un nouveau quota d'usage alloué à la session utilisateur, après avoir vérifié que le crédit total restant à l'utilisateur pour cette session le permet.

Lors d'une étape E435 similaire à l'étape E423 décrite en relation avec la figure 1, la passerelle PGW reçoit la réponse de mise à jour CCAn, et applique à la session utilisateur US, sans l'interrompre, les règles de contrôle mises à jour par le message CCAn, en l'occurrence le nouveau quota d'usage que l'utilisateur est autorisé à consommer pour la session US.

Lors d'une étape E546, l'entité de contrôle OPCn met à jour le compteur associé au crédit total restant pour la session US, en y additionnant le quota alloué lors de la dernière étape d'émission d'une réponse de mise à jour de type CCAi, CCAu ou CCAn, diminué de la part de ce quota consommée, qui est comprise dans l'information reçue dans la requête CCRn reçue lors de l'étape E544.

Lors d'une étape E547 similaire à l'étape E532 décrite en relation avec la figure 1, l'entité de contrôle OPCn émet une réponse de suivi de consommation UCresn comprenant la valeur du compteur associé au crédit total restant pour la session US. On comprend que cette valeur correspond à l'état de consommation du crédit à un moment précédant immédiatement l'étape E434. Comme le temps écoulé entre cette étape E434 et l'étape E547 est négligeable, la valeur du compteur est fiable.

Lors d'une étape E548 similaire à l'étape E524 décrite en relation avec la figure 1, l'entité de contrôle OPC met à jour le compteur associé au crédit total restant pour la session US, par soustraction du quota alloué.

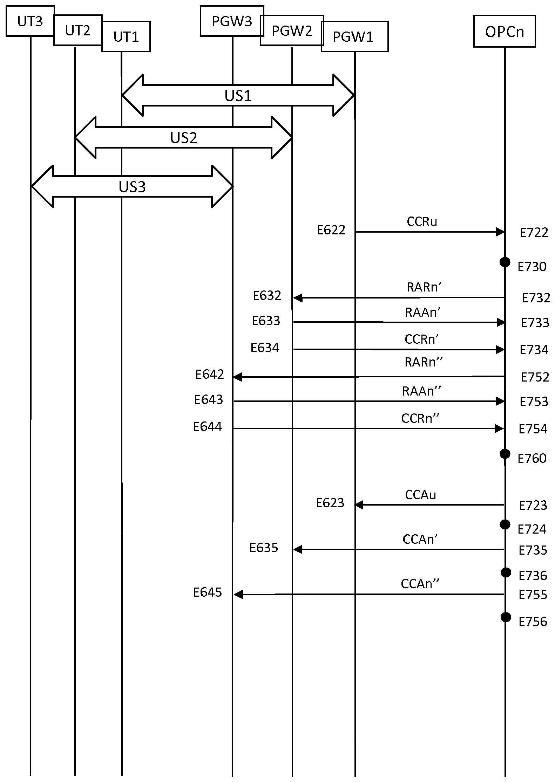

La **figure 3** présente un exemple d'enchainement et de mise en œuvre des étapes d'un procédé de suivi de la consommation d'un service de communication électronique par un terminal mobile attaché à un réseau mobile, selon un aspect de l'invention, lorsque le terminal est en mesure de partager un crédit d'usage avec d'autres terminaux.

Dans le cas d'une offre de service sous un seul contrat pour plusieurs membres d'un même foyer, ou pour plusieurs employés d'une même société, il peut arriver qu'un utilisateur épuise son crédit restant avant les autres. Si aucun quota ne peut lui être attribué, la session est terminée faute de crédit, et le service est coupé.

La figure 3 illustre un aspect de l'invention permettant de redistribuer les crédits restants entre tous les utilisateurs d'un même groupe, et ainsi éviter les coupures de service lorsqu'il reste suffisamment de crédit à au moins un des utilisateurs. Les sessions d'utilisateurs US1, US2 et US3 de la figure 3 sont associées par exemple par un contrat commun liant leurs utilisateurs ou leurs terminaux.

Les sessions d'utilisateurs US1, US2 et US3 sont établies de façon similaire à la session US, décrit en référence à la figure 1. Par souci de généralisation les terminaux UT1, UT2 et UT3 sont distincts, et les passerelles PGW1, PGW2 et PGW3 sont distinctes, mais certains ou tous les terminaux peuvent être identiques, et certaines ou toutes les passerelles peuvent être identiques.

Lorsque la passerelle PGW1 détecte que le quota d'usage est atteint pour la session US1, la passerelle PGW1 émet vers l'entité de contrôle OPCn, lors d'une étape E622, une requête de mise à jour CCRu comprenant une information relative au quota consommé.

Lors d'une étape E722, l'entité de contrôle OPCn reçoit la requête CCRu, et en déduit qu'un nouveau quota d'usage doit être alloué à la session US1.

Lors d'une étape E730, l'entité de contrôle OPCn détecte que le crédit restant à l'utilisateur pour la session US1 est inférieur au quota d'usage devant être alloué. Autrement dit, la session US1 a épuisé tout son crédit. L'entité de contrôle OPCn décide alors d'effectuer un suivi de consommation pour tous les autres utilisateurs faisant partie du même groupe que l'utilisateur de la session US1, afin de vérifier s'il reste du crédit ailleurs. La réponse CCAu à la requête CCRu est aussi différée, contrairement à la technique antérieure.

Lors d'une étape E732 (resp. 752) similaire à l'étape E542, l'entité de contrôle OPCn émet une requête de mise à jour RARn' (resp. RARn"), reçue par la passerelle PGW2 (resp. PGW3) lors d'une étape E632 (resp. E642).

Lors d'une étape E633 (resp. E643) similaire à l'étape E433, la passerelle PGW2 (resp. PGW3) émet une réponse RAAn' (resp. RAAn"), reçue par l'entité de contrôle OPCn lors d'une étape E733 (resp. E753).

Lors d'une étape E634 (resp. E644) similaire à l'étape E434, la passerelle PGW2 (resp. PGW3) émet une requête de mise à jour CCRn' (resp. CCRn"), reçue par l'entité de contrôle OPCn lors d'une étape E734 (resp. E754).

Contrairement à la technique antérieure, l'entité de contrôle OPCn diffère l'émission des réponses CCAn' et CCAn" correspondant aux requêtes CCRn' et CCRn".

Lors d'une étape E760, sur la base des informations reçues comprises dans les requêtes CCRn' et CCRn", l'entité de contrôle OPCn met à jour les compteurs associés au crédit total restant pour respectivement la session US2 et la session US3. Si le total de ces compteurs est supérieur ou égal à un seuil prédéterminé, une partie prédéterminée de ce total est transférée de ces compteurs vers le compteur associé au crédit total restant pour la session US1. Ce n'est qu'une fois tous les compteurs mis à jour de cette façon que peuvent reprendre les réponses de type CCA qui ont été différées.

Une réponse CCAu est émise lors d'une étape E723 similaire à l'étape E523, et est reçue par la passerelle PGW1 lors d'une étape E623 similaire à l'étape E423.

Une réponse CCAn' (resp. CCAn") est émise lors d'une étape E735 (resp. E755) similaire à l'étape E523, et est reçue par la passerelle PGW2 (resp. PGW3) lors d'une étape E635 (resp. E645) similaire à l'étape E423.

Les étapes de mise à jour de compteur E724, E736 et E756 sont similaires à l'étape E524 décrite en référence à la figure 1.

Dans une variante non illustrée, les réponses de type CCA ne sont pas différées sauf la réponse CCAu de l'étape E723, qui est émise à partir du moment où l'entité de contrôle OPCn sait qu'il reste du crédit ailleurs, par exemple dès qu'une réponse CCRn' de l'étape E734 ou CCRn" de l'étape E754 indique qu'il reste suffisamment de crédit à redistribuer venant d'au moins une autre des sessions associées US2 ou US3.

Il est à noter que si, lors de l'étape E730, certaines ou toutes les sessions US2 ou US3 ne sont pas en cours, l'entité de contrôle OPCn peut quand même consulter les compteurs d'usage associés aux terminaux UT2 et/ou UT3 et ainsi déterminer s'il reste du crédit à redistribuer.

On comprend aussi que grâce à l'invention il est possible d'effectuer, en une seule requête/réponse entre le système d'information IS et l'entité de contrôle OPCn, un suivi de consommation exact pour tout un groupe de terminaux associés.

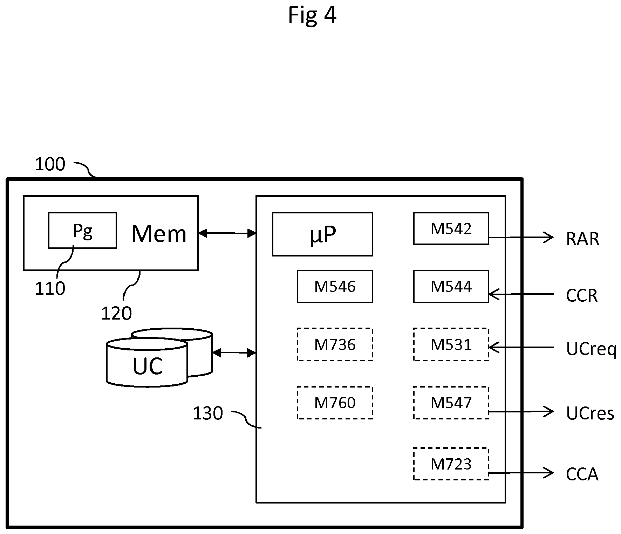

En relation avec la **figure 4****,** on présente maintenant un exemple de structure d'un dispositif de suivi de la consommation d'un service de communication électronique par un terminal mobile attaché à un réseau mobile, selon un aspect de l'invention.

Le dispositif 100 met en œuvre le procédé de suivi de la consommation d'un service de communication électronique par un terminal mobile attaché à un réseau mobile, dont différents modes de réalisation viennent d'être décrits.

Un tel dispositif 100 peut être mis en œuvre dans une entité de contrôle, spécialisée dans l'établissement de règles de contrôle PCC (caractéristiques de QoS et de facturation) pour sessions de connectivité IP (sessions utilisateur), par exemple dans un équipement de type "Policy Control and Charging Rules Function" (PCRF, fonction des règles de politique et de comptage, en anglais), ou dans un équipement de type "Online Charging System" (OCS, système de comptage en ligne).

Par exemple, le dispositif 100 comprend une unité de traitement 130, équipée par exemple d'un microprocesseur µP, et pilotée par un programme d'ordinateur 110, stocké dans une mémoire 120 et mettant en œuvre le procédé de suivi de la consommation d'un service de communication électronique par un terminal mobile attaché à un réseau mobile, selon l'invention. A l'initialisation, les instructions de code du programme d'ordinateur 110 sont par exemple chargées dans une mémoire RAM, avant d'être exécutées par le processeur de l'unité de traitement 130.

Un tel dispositif 100 comprend :
- un module M542 d'émission, apte à émettre un message RAR destiné à déclencher une requête de crédit de la part d'un terminal ;
- un module M544 de réception, apte à recevoir un message CCR de requête de crédit pour un terminal, le message comprenant une information relative à une part consommée d'un quota du crédit restant au terminal ;
- un module M546 de mise à jour, apte à mettre à jour dans un compteur d'usage UC le crédit restant au terminal ;

Avantageusement, le dispositif 100 peut comprendre :
- un module M531 de réception, apte à recevoir une requête UCreq de suivi de crédit d'un terminal pour un service ;
- un module M547 d'émission, apte à émettre une réponse UCres de suivi de crédit d'un terminal pour un service, comprenant la valeur du crédit restant mis à jour en fonction de l'information.

Avantageusement, le dispositif 100 peut également comprendre, à la place ou en complément des modules M531 et M547 :
- un module M736 de vérification, apte à vérifier si un crédit restant à un terminal est supérieur ou égal à un seuil prédéterminé ;
- un module M760 de partage, apte à partager un crédit restant à au moins un terminal avec un autre terminal ;
- un module M723 d'émission, apte à émettre un message CCA de réponse de crédit pour un terminal, le message comprenant une autorisation pour le terminal de consommer un quota prédéterminé de crédit.

Les modules décrits en relation avec la figure 4 peuvent être des modules matériels ou logiciels.

## Revendications

1. **Procédé** de partage de la consommation d'un service de communication électronique par un terminal mobile (UT1) attaché à un réseau mobile, une session (US1) pour consommer ledit service étant établie initialement entre le terminal et une passerelle (PGW1) entre le réseau mobile et un réseau de commutation par paquets, un crédit restant de consommation dudit service étant attribué initialement au terminal, le terminal requérant périodiquement l'autorisation de consommer un quota prédéterminé du crédit restant, le procédé comprenant les étapes suivantes :
• Réception (E722) d'un message de requête de crédit pour le terminal, en provenance de la passerelle, le message comprenant une information relative à une part du quota prédéterminé consommée par le terminal,
• Emission (E723) d'un message de réponse de crédit pour le terminal, à destination de la passerelle, comprenant une autorisation pour le terminal de consommer le quota prédéterminé de crédit,
• Mise à jour (E724) du crédit restant en fonction de l'information, le procédé étant tel que l'étape (E723) d'émission d'un message de réponse de crédit pour le terminal est différée jusqu'à l'accomplissement des étapes suivantes, où le terminal est associé à au moins un autre terminal (UT2, UT3) ayant son propre crédit restant, une autre session pour consommer un service ayant été établie avec l'autre terminal :
• Détection (E730) d'un crédit restant inférieur au quota prédéterminé,
• Emission (E732, E752) d'un message destiné à déclencher une requête de crédit pour l'au moins un autre terminal,
• Réception (E734, E754) d'un message de requête de crédit pour l'au moins un autre terminal le message comprenant une information relative à une part d'un autre quota prédéterminé de crédit restant, consommée par l'au moins un autre terminal,
• Mise à jour (E760) du crédit restant à l'au moins un autre terminal en fonction de l'information, et, si le crédit restant à l'au moins un autre terminal est supérieur ou égal à un seuil prédéterminé :
• Partage (E760) du crédit restant à l'au moins un autre terminal, entre le terminal et l'au moins un autre terminal.

2. **Procédé** de partage selon la revendication précédente, où le message à destination de la passerelle, destiné à déclencher une requête de crédit pour le terminal, est un message RAR de type Diameter.

3. **Procédé** de partage selon l'une des revendications précédentes, où le message de requête de crédit pour le terminal, en provenance de la passerelle, est un message CCR de type Diameter.

4. **Procédé** de partage selon l'une des revendications précédentes, où le message de réponse de crédit pour le terminal, à destination de la passerelle, est un message CCA de type Diameter.

5. **Procédé** de partage selon l'une des revendications 3 ou 4, où l'émission d'un message CCA en réponse à la réception d'un message CCR correspondant est différée au moins jusqu'à la réception d'un autre message CCR.

6. **Dispositif** de partage de la consommation d'un service de communication électronique par un terminal mobile (UT) attaché à un réseau mobile, comprenant des moyens de mettre en œuvre le procédé selon la revendication 1.

7. **Entité (OPCn) de contrôle de réseau mobile,** comprenant un dispositif de partage de la consommation d'un service de communication électronique par un terminal mobile (UT) attaché à un réseau mobile, conforme à la revendication 6.

8. **Programme d'ordinateur,** comprenant des instructions qui, lorsque ces instructions sont exécutées par un processeur, conduisent celui-ci à mettre en œuvre les étapes du procédé de partage de la consommation d'un service de communication électronique par un terminal mobile (UT) attaché à un réseau mobile, selon la revendication 1.

9. **Support d'enregistrement** lisible par une entité (OPCn) de contrôle de réseau mobile, sur lequel est enregistré le programme selon la revendication 8.

## Patentansprüche

1. Verfahren zur gemeinsamen Nutzung des Verbrauchs eines elektronischen Kommunikationsdienstes durch ein mobiles Endgerät (UT1), das einem Mobilnetz zugeordnet ist, wobei eine Sitzung (US1) zum Verbrauchen des Dienstes anfangs zwischen dem Endgerät und einem Gateway (PGW1) zwischen dem Mobilnetz und einem Paketvermittlungsnetz hergestellt wird, wobei ein Rest-Verbrauchsguthaben des Dienstes anfangs dem Endgerät zugewiesen wird, wobei das Endgerät periodisch die Autorisierung anfordert, eine vorbestimmte Quote des Restguthaben zu verbrauchen, das Verfahren umfassend die folgenden Schritte:
• Empfangen (E722) einer Nachricht zur Anforderung von Guthaben für das Endgerät von dem Gateway, die Nachricht umfassend eine Information bezogen auf einen Teil der vorbestimmten Quote, die durch das Endgerät verbraucht wird,
• Senden (E723) einer Antwortnachricht für Guthaben für das Endgerät an den Gateway, umfassend eine Autorisierung für das Endgerät, die vorbestimmte Guthabenquote zu verbrauchen,
• Aktualisieren (E724) des Restguthabens in Abhängigkeit von der Information, wobei das Verfahren so beschaffen ist, dass der Schritt (E723) des Sendens einer Antwortnachricht für Guthaben für das Endgerät bis zur Durchführung der folgenden Schritte aufgeschoben wird, wobei das Endgerät mindestens einem anderen Endgerät (UT2, UT3) mit seinem eigenen Restguthaben zugewiesen wird, wobei eine andere Sitzung zum Verbrauchen eines Dienstes mit dem anderen Endgerät hergestellt wurde:
• Erfassen (E730) eines Restguthabens unter der vorbestimmten Quote,
• Senden (E732, E752) einer Nachricht zur Auslösung einer Anforderung von Guthaben für das mindestens eine andere Endgerät,
• Empfangen (E734, E754) einer Nachricht zur Anforderung von Guthaben für das mindestens eine andere Endgerät, die Nachricht umfassend eine Information bezogen auf einen Teil einer anderen vorbestimmten Quote von Restguthaben, der durch das mindestens eine andere Endgerät verbraucht wird,
• Aktualisieren (E760) des Restguthabens des mindestens einen anderen Endgeräts in Abhängigkeit von der Information, und, wenn das Restguthaben des mindestens einen anderen Endgeräts größer oder gleich einem vorbestimmten Schwellenwert ist:
• gemeinsames Nutzen (E760) des Restguthabens des mindestens einen anderen Endgeräts zwischen dem Endgerät und dem mindestens einen anderen Endgerät.

2. Verfahren zur gemeinsamen Nutzung nach dem vorhergehenden Anspruch, wobei die Nachricht an den Gateway zur Auslösung einer Anforderung von Guthaben für das Endgerät eine RAR-Nachricht vom Diameter-Typ ist.

3. Verfahren zur gemeinsamen Nutzung nach einem der vorhergehenden Ansprüche, wobei die Nachricht zur Anforderung von Guthaben für das Endgerät von dem Gateway eine CCR-Nachricht vom Diameter-Typ ist.

4. Verfahren zur gemeinsamen Nutzung nach einem der vorhergehenden Ansprüche, wobei die Antwortnachricht für Guthaben für das Endgerät an den Gateway eine CCA-Nachricht vom Diameter-Typ ist.

5. Verfahren zur gemeinsamen Nutzung nach einem der Ansprüche 3 oder 4, wobei das Senden einer CCA-Nachricht in Reaktion auf den Empfang einer entsprechenden CCR-Nachricht zumindest bis zum Empfang einer anderen CCR-Nachricht aufgeschoben wird.

6. Vorrichtung zur gemeinsamen Nutzung des Verbrauchs eines elektronischen Kommunikationsdienstes durch ein mobiles Endgerät (UT), das einem Mobilnetz zugeordnet ist, umfassend Mittel zur Umsetzung des Verfahrens nach Anspruch 1.

7. Mobilnetz-Steuereinheit (OPCn), umfassend eine Vorrichtung zur gemeinsamen Nutzung des Verbrauchs eines elektronischen Kommunikationsdienstes durch ein mobiles Endgerät (UT), das einem Mobilnetz zugeordnet ist, nach Anspruch 6.

8. Computerprogramm, umfassend Anweisungen, die, wenn diese Anweisungen durch einen Prozessor ausgeführt werden, diesen dazu veranlassen, die Schritte des Verfahrens zur gemeinsamen Nutzung des Verbrauchs eines elektronischen Kommunikationsdienstes durch ein mobiles Endgerät (UT), das einem Mobilnetz zugeordnet ist, nach Anspruch 1, durchzuführen.

9. Speichermedium, das von einer Mobilnetz-Steuereinheit (OPCn) gelesen werden kann, auf welchem das Programm nach Anspruch 8 gespeichert ist.

## Claims

1. **Method** for sharing the consumption of an electronic communication service by a mobile terminal (UT1) attached to a mobile network, a session (US1) for consuming said service being established initially between the terminal and a gateway (PGW1) between the mobile network and a packet-switched network, a remaining credit for consuming said service being assigned initially to the terminal, the terminal periodically requesting authorization to consume a predetermined quota of the remaining credit, the method comprising the following steps:
• reception (E722) of a credit request message from the gateway, relating to the terminal, the message containing information relating to a part of the predetermined quota consumed by the terminal,
• transmission (E723) of a credit answer message to the gateway, relating to the terminal, containing an authorization for the terminal to consume the predetermined credit quota,
• update (E724) of the remaining credit according to the information,
the method being such that the step (E723) for transmitting a credit answer message relating to the terminal is deferred until the following steps are carried out, in which the terminal is associated with at least one other terminal (UT2, UT3) that has its own remaining credit, another session for consuming the service having been established with the other terminal:
• detection (E730) of a remaining credit less than the predetermined quota,
• transmission (E732, E752) of a message intended to trigger a credit request relating to the at least one other terminal,
• reception (E734, E754) of a credit request message relating to the at least one other terminal, the message containing information relating to a part of another predetermined remaining credit quota consumed by the at least one other terminal,
• update (E760) of the remaining credit for the at least one other terminal according to the information, and, if the remaining credit for the at least one other terminal is greater than or equal to a predetermined threshold:
• sharing (E760) of the remaining credit for the at least one other terminal, between the terminal and the at least one other terminal.

2. **Sharing method** according to the preceding claim, in which the message to the gateway, intended to trigger a credit request relating to the terminal, is a Diameter RAR message.

3. **Sharing method** according to either of the preceding claims, in which the credit request message from the gateway, relating to the terminal, is a Diameter CCR message.

4. **Sharing method** according to one of the preceding claims, in which the credit answer message to the gateway, relating to the terminal, is a Diameter CCA message.

5. **Sharing method** according to either of Claims 3 and 4, in which the transmission of a CCA message in response to the reception of a corresponding CCR message is deferred at least until another CCR message is received.

6. **Device** for sharing the consumption of an electronic communication service by a mobile terminal (UT) attached to a mobile network, comprising means for implementing the method according to Claim 1.

7. **Mobile network control entity (OPCn),** comprising a device for sharing the consumption of an electronic communication service by a mobile terminal (UT) attached to a mobile network, in accordance with Claim 6.

8. **Computer program,** containing instructions which when these instructions are executed by a processor, cause the program to implement the steps of the method for sharing the consumption of an electronic communication service by a mobile terminal (UT) attached to a mobile network, according to Claim 1.

9. **Recording medium** readable by a mobile network control entity (OPCn), on which medium the program according to Claim 8 is recorded.
